(19) Europäisches Patentamt
European Patent Office
Office européen des brevets

(11) EP 0 745 620 B1

(12) FASCICULE DE BREVET EUROPEEN

(45) Date de publication et mention de la délivrance du brevet:
**29.10.1997 Bulletin 1997/44**

(51) Int Cl.6: **C08F 228/02**, G02B 1/04

(21) Numéro de dépôt: **96401064.9**

(22) Date de dépôt: **15.05.1996**

(54) **Compositions polymérisables à base de monomères thio(méth)acrylates, polymères à faible indice de jaune obtenus à partir de telles compositions et lentilles ophtalmiques correspondantes**

Polymerisierbare Zusammensetzungen auf Basis von Thio(meth)acrylatmonomere, Polymere mit niedrigem Gelbindex hergestellt aus diesen Zusammensetzungen und daraus hergestellte ophthalmische Linsen

Polymerisable compositions based on thio(meth)acrylate monomers, polymers having low yellowness index made from these compositions and ophthalmic lenses made therefrom

(84) Etats contractants désignés:
**DE ES FR GB IT**

(30) Priorité: **31.05.1995 FR 9506442**

(43) Date de publication de la demande:
**04.12.1996 Bulletin 1996/49**

(73) Titulaire: **ESSILOR INTERNATIONAL (COMPAGNIE GENERALE D'OPTIQUE)**
**F-94227 Charenton cédex (FR)**

(72) Inventeurs:
- **Keita, Gabriel**
  **92400 Courbevoie (FR)**
- **Jiang, Peiqi**
  **Tokyo (JP)**

(74) Mandataire: **Casalonga, Axel**
**BUREAU D.A. CASALONGA - JOSSE**
**Morassistrasse 8**
**80469 München (DE)**

(56) Documents cités:
**EP-A- 0 273 661** **EP-A- 0 394 495**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 745 620 B1

## Description

La présente invention concerne de manière générale des compositions polymérisables à base de monomères thio (méth) acrylates, conduisant à des polymères organiques transparents à faible indice de jaune.

Il existe depuis quelques années une demande grandissante pour des lentilles ophtalmiques qui, tout en garantissant les mêmes qualités optiques que les lentilles en matériau polymère organique déjà connu, présentent une plus faible épaisseur et sont donc plus légères.

Différents matériaux ont été développés pour répondre à cette demande.

Une famille de matériaux récemment testée dans le domaine ophtalmique est la famille des thio(méth)acrylates.

Les matériaux obtenus par polymérisation de ces monomères, seuls ou en présence de comonomères, présentent un indice de réfraction élevé pouvant atteindre, voire dépasser n=1,6.

Ainsi, du fait de cet indice de réfraction élevé, il est possible de fabriquer, avec ces matériaux, des lentilles d'épaisseurs plus faibles pour un pouvoir correcteur (puissance optique) équivalent.

De tels matériaux et leurs applications dans le domaine ophtalmique sont décrits, en particulier, dans les brevets US-A-4606864, EP-A-273661, EP-A-273710, EP-A-382477, EP-A-384725 et EP-A-394495.

Ces matériaux présentent, cependant, l'inconvénient de présenter un indice de jaune élevé.

Il est souhaitable d'obtenir des polymères ne présentant pas de couleur résiduelle après polymérisation tout en conservant leurs propriétés mécaniques, en particulier thermomécaniques, et en préservant, voire en améliorant leur résistance au vieillissement, c'est-à-dire en évitant un accroissement du jaunissement au cours du temps sous irradiation par la lumière ultraviolette.

On a déjà préconisé, par exemple dans la demande de brevet français FR-A-2699541 au nom d'ESSILOR, d'utiliser des compositions renfermant un monomère aromatique, en particulier des di(méth)acrylates polyéthoxylés dérivés du bisphénol A à raison d'au moins 50% en poids de ces derniers dans le mélange polymérisable, et des agents anti-jaune dérivés de l'alcool allylique.

Bien que les compositions transparentes décrites dans la demande de brevet français FR-A-2699541 s'avèrent particulièrement satisfaisantes dans les applications ophtalmiques, il serait souhaitable de pouvoir formuler des compositions polymères transparentes utiles dans le domaine ophtalmique, ayant de bonnes propriétés thermomécaniques, un faible indice de jaune, et un indice de réfraction élevé, de l'ordre de n=1,6.

On atteint les objectifs ci-dessus, selon l'invention, en réalisant une composition polymère transparente comprenant :

un *composant A* comprenant :

- au moins 10% en poids d'un monomère ou d'un mélange de monomères (I), comportant au moins une fonction thioacrylate ou thiométhacrylate;
- 0 à 90% en poids d'un ou plusieurs monomères (II) copolymérisables par voie radicalaire, préférentiellement vinyle, acrylique ou méthacrylique mono- ou polyfonctionnels; et

*un composant B* comprenant, par rapport au poids du composant A :

- 0,1 à 15% en poids d'un monomère (III) comportant une insaturation éthylénique qui ne contribue pas à un système aromatique et ayant un carbone en position $\alpha$ par rapport à l'insaturation éthylénique portant un groupe hydroxy libre.

Le monomère ou mélange de monomères (I) du composant A de la composition polymère transparente selon l'invention, englobe tout monomère comportant au moins une fonction thioacrylate ou thiométhacrylate.

De préférence, les monomères (I) répondent à la formule :

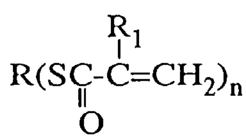

dans laquelle :

R représente un radical hydrocarboné aliphatique, linéaire ou ramifié, monovalent ou polyvalent, ou un groupement aromatique monovalent ou polyvalent directement lié à l'atome de soufre du ou des groupements thio(méth)acrylates par un noyau aromatique ou par l'intermédiaire d'une chaîne alkyle linéaire, le radical R pouvant comporter

dans sa chaîne un ou plusieurs groupes choisis parmi -O-, -S-,

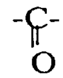 ;

$R_1$ représente l'hydrogène ou $-CH_3$; et
n est un entier de 1 à 6, de préférence de 1 à 3.

Parmi les radicaux R monovalents, on peut citer les radicaux alkyle, linéaires ou ramifiés, de $C_1$ à $C_5$, les radicaux de formule :

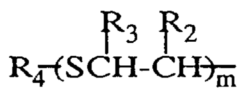 ,

dans laquelle :

$R_2$ et $R_3$ sont, indépendamment l'un de l'autre, H ou un radical alkyle, linéaire ou ramifié en $C_1$-$C_5$;
$R_4$ est un radical alkyle, linéaire ou ramifié en $C_1$-$C_5$, un radical aralkyle en $C_7$-$C_{10}$ ou un radical aryle en $C_6$-$C_{12}$, éventuellement substitué, en particulier par des groupes alkyle et/ou halogène; et
m est un entier de 1 à 4.

Parmi les radicaux R monovalents préférés, on peut citer :

$C_2H_5SCH_2CH_2$- ;

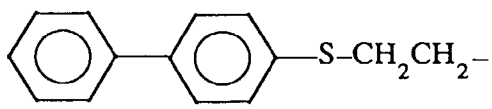 ;

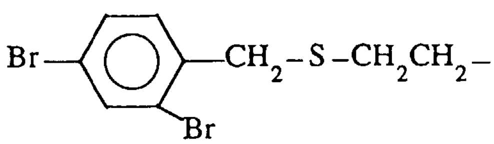 ;

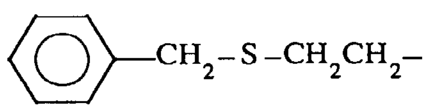 ;

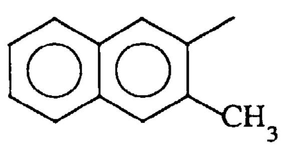 .

Des monomères de formule (I) pour lesquels n=1 et tels que définis ci-dessus, sont décrits, entre autres, dans les brevets US-A-4606864, JP-63316766 et EP-A-0384725.

Parmi les radicaux R divalents entrant dans le cadre des monomères de formule (I), on peut citer les radicaux alkylène, linéaires ou ramifiés, en $C_2$ à $C_{10}$ pouvant comporter dans leur chaîne un ou plusieurs groupes -O-, -S- ou

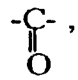

les radicaux alkylidène de formule

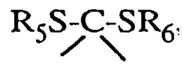

dans laquelle $R_5$ et $R_6$ sont des radicaux alkyle en $C_1$-$C_5$, les radicaux de formule :

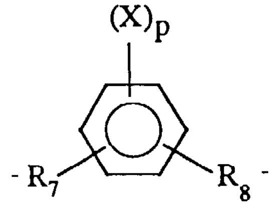

dans laquelle $R_7$ et $R_8$ sont des groupes alkylène, linéaires ou ramifiés, en $C_1$-$C_5$ pouvant comporter un ou plusieurs groupes -O-, -S- ou

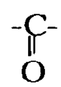

dans leurs chaînes et X est choisi parmi les radicaux alkyle en $C_1$-$C_5$ et les halogène, et p est un entier de 0 à 4, et les radicaux de formule :

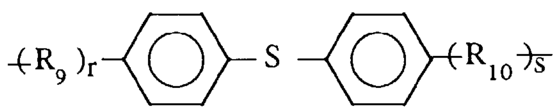

dans laquelle $R_9$ et $R_{10}$ sont des radicaux alkyle, linéaires ou ramifiés en $C_1$ à $C_5$, pouvant comporter dans leur chaîne un ou plusieurs groupes -O-, -S- ou

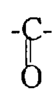

et r et s sont égaux à 0 ou 1.

Parmi les radicaux R divalents préférés, on peut citer les radicaux :

$$-(CH_2)_x-$$

où x est un entier de 2 à 8,
les radicaux $(CH_2CH_2O)_yCH_2CH_2$- où y est un entier de 1 à 4,
les radicaux $(CH_2CH_2S)_zCH_2CH_2$- où z est un entier de 1 à 4,
les radicaux $(CH_2)_{u'}(S(CH_2)_{v'})_{x'}S$-$(CH_2)_{w'}$ où x' est égal à 0 ou 1, et u', v', w' sont des entiers de 2 à 6,
les radicaux de formule :

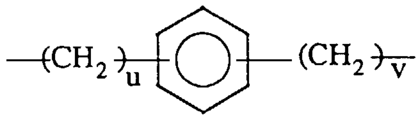

où u et v sont des entiers de 1 à 4,

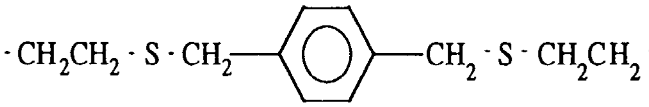 ,

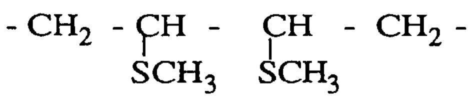 , et 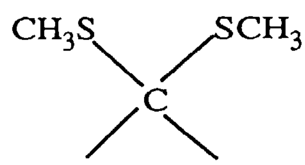 .

Les radicaux R divalents particulièrement préférés sont :

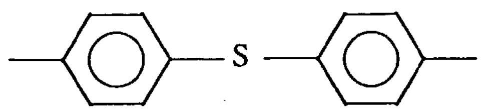

et

$-H_4C_2-S-C_2H_4-$

Des monomères de formule (I) divalents sont décrits, entre autres, dans les brevets EP-A-273661, EP-A-273710, EP-A-384725.

Parmi les radicaux R trivalents des monomères de formule (I), on peut citer les radicaux alkyltriyle en $C_3$ à $C_{10}$ pouvant comporter dans leur chaîne, un ou plusieurs groupes -O-, -S- ou

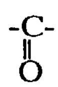 ,

les radicaux alkylaryle trivalents dont les chaînes alkyle peuvent comporter un ou plusieurs groupes -S- ou -O-, et les groupes aryle trivalents.

Parmi les radicaux R trivalents ou de valence supérieure, on peut citer :

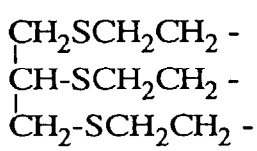 , 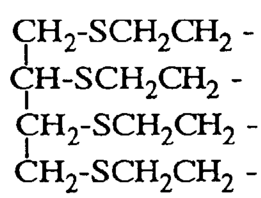 ,

etc...

Parmi les monomères de formule (I) recommandés dans la présente invention, on peut citer :

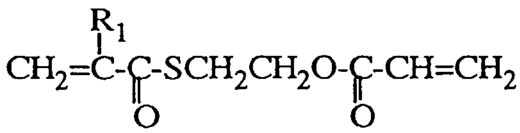

S-2-acryloyloxyéthylthio(méth)acrylate,

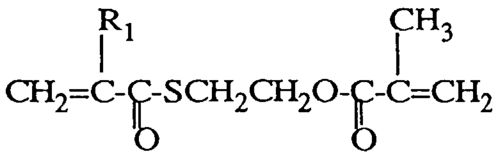

S-2-methacryloyloxyéthylthio(méth)acrylate,

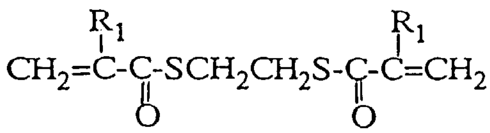

1,2-bis[(méth)acryloylthio]éthane,

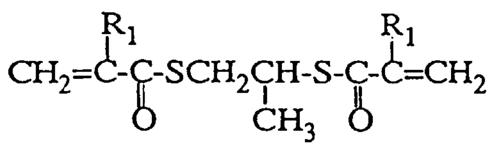

1,2-bis[(méth)acryloylthio]propane,

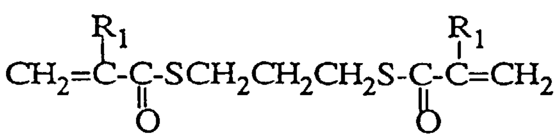

1,3-bis[(méth)acryloylthio]propane,

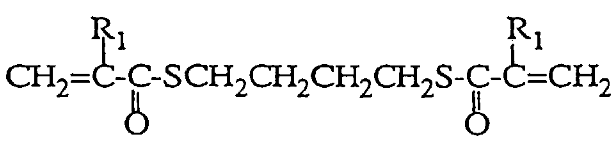

1,4-bis[(méth)acryloylthio]butane,

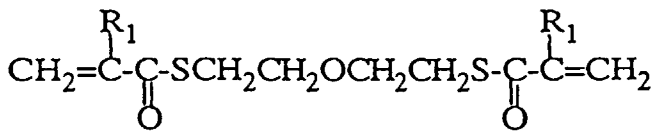

bis-2-[(méth)acryloylthioéthyl]éther,

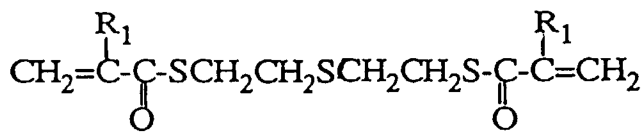

bis-2-[(méth)acryloylthioéthyl]sulfure,

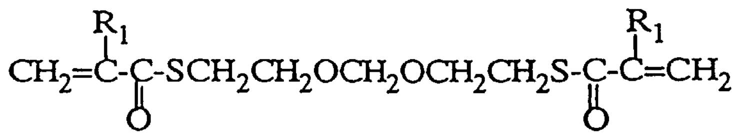

bis-2-[(méth)acryloylthioéthoxy]méthane,

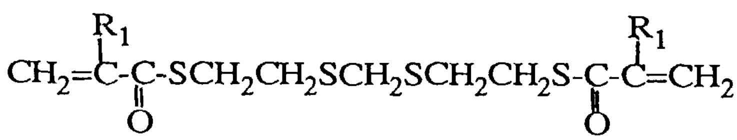

bis-2-[(méth)acryloylthioéthylthio]méthane,

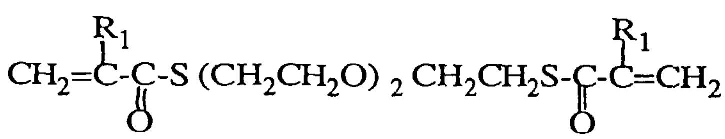

1,2-bis-[2-(méth)acryloylthioéthoxy]éthane,

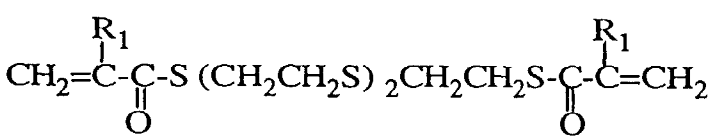

1,2-bis-[2-(méth)acryloylthioéthylthio]éthane,

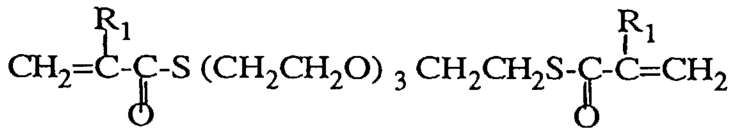

bis-[2-(2-(méth)acryloylthioéthoxy)éthyl]éther,

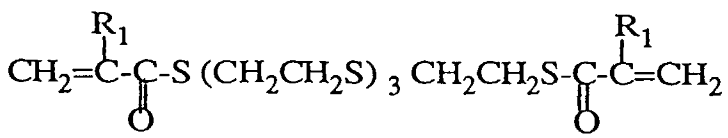

bis-[2-(2-(méth)acryloylthioéthylthio)éthyl]sulfure,

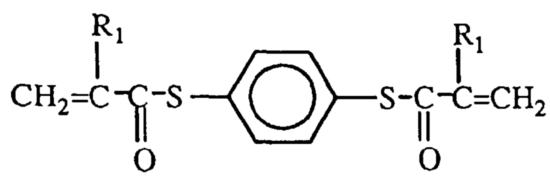

1,4-bis[(méth)acryloylthio]benzène,

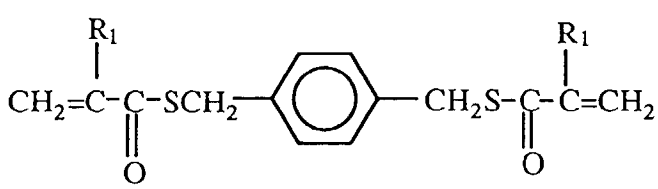

1,4-bis[(méth)acryloylthiométhyl]benzène,

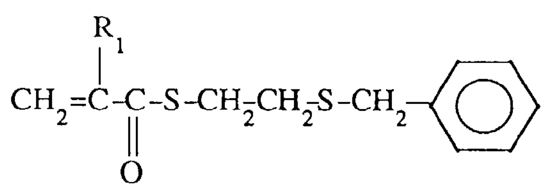

Benzylthioéthylthio(méth)acrylate,

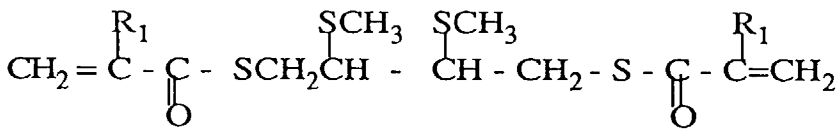

1,4-[bis(méth)acryloylthio]-2,3-diméthylthiobutane,

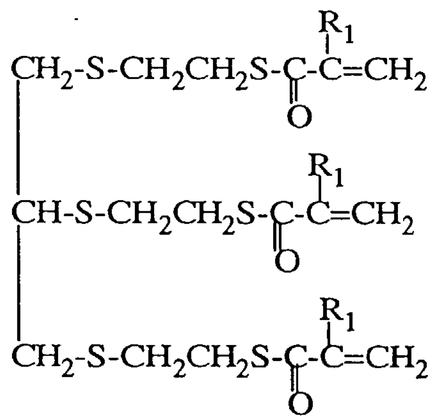

1,2,3-tris[(méth)acryloylthioéthyl]thiolpropane,

et

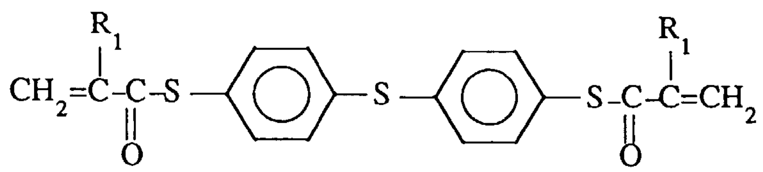

bis[(méth)acryloylthiophényl]sulfure,

où $R_1$ représente un atome d'hydrogène ou un groupe méthyle.

Les monomères tout particulièrement recommandés dans la présente invention sont le bis(4-méthacryloylthiophényl)sulfure (BMATPS) et le bis(2-méthacryloylthioéthyl)sulfure (BMATES).

Le ou les mélanges de monomères de formule (I) représentent au moins 10% en poids des constituants du composant A par rapport au poids total de ce composant A. De préférence, le ou les monomères de formule (I) représentent 20 à 100% en poids du composant A.

De préférence, lorsque les composés de formule (I) sont des composés aromatiques, ils représentent de 20 à 60% en poids et mieux de 20 à 40% en poids du composant A.

De préférence, lorsque les composés de formule (I) ne sont pas aromatiques, ils représentent de 30 à 100% en poids et mieux de 50 à 100% en poids du composant A.

Il est particulièrement surprenant de constater que l'effet anti-jaune se manifeste même pour des monomères de formule (I) non aromatiques.

Le composant A des compositions polymères transparentes selon l'invention, comprend en outre 0 à 90% en poids d'un ou plusieurs comonomères (2) vinyle, acrylique ou méthacrylique, mono- ou polyfonctionnels. On peut utiliser comme comonomère (II) tout monomère vinyle, acrylique ou méthacrylique, qui est compatible dans le composant A.

Parmi les monomères (II) copolymérisables avec les monomères (I), on peut citer les esters d'acides gras insaturés, les composés vinyle aromatiques, les acides gras insaturés et dérivés de ceux-ci, les acides dibasiques insaturés et leurs dérivés, les composés de cyanure de vinyle comme le (méth)acrylonitrile.

Les acides gras insaturés et leurs dérivés comprennent les (méth) acrylamides tels que la (méth)acrylamide, la N,N-diméthyl(méth) acrylamide, la N,N-diéthyl(méth)acrylamide et analogues, et les acides gras insaturés tels que les

acides (méth)acryliques, les esters d'acides gras insaturés, par exemple, les (méth)acrylates d'alkyle tels que le méthyl (méth)acrylate, l'éthyl(méth)acrylate, le butyl(méth)acrylate, le 2-éthylhexyl(méth)acrylate, l'octyl(méth)acrylate, le dodécyl(méth) acrylate, l'octadécyl(méth)acrylate, le cyclohexyl(méth)acrylate, le méthylcyclohexyl(méth)acrylate, l'(iso) bornyl(méth)acrylate, l'adamantyl(méth)acrylate et analogues; des esters aromatiques d'acides acryliques tels que le phényl(méth)acrylate, le benzyl(méth)acrylate, le 1-naphtyl(méth)acrylate, le fluorophényl(méth)acrylate, le chlorophényl(méth)acrylate, le bromophényl(méth)acrylate, le tribromophényl(méth)acrylate, le méthoxyphényl(méth)acrylate, le cyanophényl(méth)acrylate, le biphényl(méth)acrylate, le bromobenzyl (méth)acrylate et analogues; les (méth) acrylates d'haloalkyle tels que le fluorométhyl(méth)acrylate, le chlorométhyl(méth)acrylate, le bromoéthyl(méth) acrylate, le trichlorométhyl(méth)acrylate et analogues; le 2-hydroxyéthyl(méth)acrylate, et l'acide (méth)acrylique d'ester de polyéthylèneglycol; des esters d'acides (méth)acryliques tels que le glycidyl(méth)acrylate et les alkylamino (méth)acrylates.

On peut également utiliser des esters d'acides acryliques α-substitués tels que des esters d'acides α-fluoro acryliques, des esters d'acides α-cyano acryliques et analogues.

Comme composés vinyl aromatiques, on peut citer le styrène ou les styrènes α-substitués tels que l'α-méthylstyrène, l'α-éthylstyrène, l'α-chlorostyrène et analogues, les styrènes à noyau substitué tels que le fluorostyrène, le chlorostyrène, le bromostyrène, le chlorométhylstyrène et le méthoxystyrène.

Des acides dibasiques insaturés et leurs dérivés comprennent des maléimides N-substitués tels que le N-méthylmaléimide, le N-éthylmaléimide, le N-butylmaléimide, le N-cyclohexylmaléimide, le N-phénylmaléimide, le N-méthylphénylmaléimide, le N-chlorophénylmaléimide, le N-carboxyphénylmaléimide et analogues, l'acide maléimique, l'anhydride maléique et l'acide fumarique.

Outre les monomères vinyle monofonctionnels, on peut également utiliser comme comonomères (II) selon la présente invention, des monomères polyfonctionnels réticulables. Par exemple, on peut utiliser des monomères réticulables difonctionnels parmi lesquels les di(méth) acrylates tels que l'éthylèneglycoldi(méth)acrylate, le diéthylèneglycoldi (méth)acrylate, le triéthylèneglycoldi(méth)acrylate, le tétraéthylèneglycoldi(méth)acrylate, le tripropylèneglycoldi (méth) acrylate, le 1,3-butylèneglycoldi(méth)acrylate, le 1,4-butanediol-di(méth)acrylate, le 1,5-pentanedioldi(méth) acrylate, le 1,6-hexanedioldi(méth)acrylate, le néopentylglycoldi(méth)acrylate, le di(méth)acrylate d'ester de l'acide hydroxypivalique néopentylglycol, le di(méth)acrylate d'oligoester, le di(méth)acrylate de polybutadiène, le 2,2-bis[4-(méth)acryloyloxyphényl]propane, le 2,2-bis[4-(ω-(méth) acryloyloxypropyléthoxy)phényl]propane, le 2,2-bis[4-(ω-(méth) acryloyloxypropyléthoxy)dibromophényl]propane, le 2,2-bis[4-(ω-(méth)acryloyloxypolypropoxy)phényl]propane, le bis[4-ω-(méth) acryloyloxypolyéthoxy)phényl]méthane et analogues, le phtalate de diallyle, l'isophtalate de diallyle, le térèphtalate de diallyle, le carbonate de diallyle, le carbonate de diallyle de diéthylèneglycol, le divinylbenzène, le divinylbiphényle, le N,N'-m-phénylène-bis maléimide, etc.; des monomères réticulables trifonctionnels tels que le tri (méth)acrylate de triméthyloléthane, le tri(méth)acrylate de triméthylolpropane, le tri(méth)acrylate de pentaérythritol, le tri(méth)allyl isocyanurate, le trimellitate de triallyle, et le chlorendate de diallyle; et des monomères réticulables tétra-fonctionnels tels que le tétra(méth)acrylate de pentaérythritol.

Une classe particulièrement recommandée de comonomères (II) sont les monomères répondant à la formule (IV) :

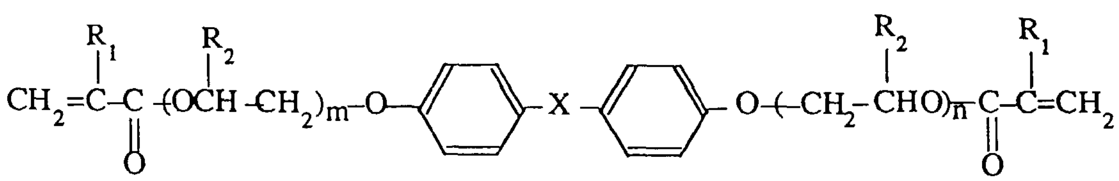

dans laquelle $R_1$ et $R_2$ désignent indépendamment l'un de l'autre, hydrogène ou un radical alkyle inférieur en $C_1$-$C_6$, X désigne O, S, CO, $SO_2$, $-CH_2-$, -CH=CH- ou

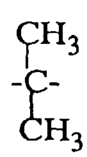

la somme m + n est comprise entre 0 et 10, inclus.

Parmi les comonomères (II) particulièrement recommandés, on peut citer le phényl(méth)acrylate, le benzyl(méth) acrylate, le 1-naphtyl(méth)acrylate, l'éthylèneglycoldi(méth)acrylate, le diéthylène glycoldi(méth)acrylate, le 1,4-butanedioldi(méth)acrylate, le 2,2-bis(4-(méth)acryloyloxyphényl)propane, le 2,2-bis(4-[ω-(méth)acryloyloxypolyéthoxy)phényl]propane et en particulier les composés de formule (IV) dans laquelle $R_1$=$CH_3$, $R_2$=H et m+n=2,6 (EBADMA), m+n=4 (DBADMA), m+n=10 (OBADMA), l'éthoxytribromobenzylacrylate (TBrBEA), le polyéthylèneglycoldiméthacrylate (PBOMA), le phénoxyéthylacrylate (AMP), les méthacrylesters commercialisés par la Société HITACHI CHEMICAL CORPORATION sous la désignation FA 513 et les composés vendus par la Société NIPPON KAYAKU COMPANY sous la dénomination R604.

Les comonomères (II) peuvent représenter de 0 à 90% en poids du composant A et de préférence représentent 80 à 20%.

De préférence encore, lorsqu'on utilise parmi les comonomères (II) du composant A, les monomères de formule (IV), ceux-ci sont de préférence utilisés en quantité inférieure à 50% en poids par rapport au poids du composant A.

Le composant B des compositions polymères transparentes selon l'invention, est un monomère ou un mélange de monomères (III) comportant une insaturation éthylénique qui ne contribue pas à un système aromatique, ayant un carbone en position alpha par rapport à l'insaturation éthylénique portant un groupe hydroxy libre.

Les monomères éthyléniques insaturés (III) utilisés selon la présente invention sont de préférence choisi parmi les monomères répondant à la formule :

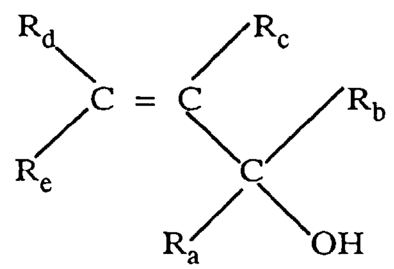

dans laquelle :

$R_a$ et $R_b$ représentent l'hydrogène, l'un des groupes $R_a$ et $R_b$ représente l'hydrogène, cependant que l'autre forme avec le groupe $R_e$ un cycle $C_5$-$C_{10}$ qui peut être substitué par un ou plusieurs groupes alkyle linéaires ou ramifiés en $C_1$-$C_4$ ou un ou plusieurs groupes alkylènes en $C_2$-$C_4$; ou l'un des groupes $R_a$ et $R_b$ peut représenter l'hydrogène, cependant que l'autre représente un groupe alkyle aliphatique en $C_1$-$C_6$, un groupe hydrocarboné cyclique en $C_4$-$C_{16}$ ou un groupe hydrocarboné aromatique en $C_6$-$C_{16}$;

$R_c$, $R_d$ et $R_e$ représentent, indépendamment les uns des autres, l'hydrogène ou un groupe alkyle en $C_1$-$C_6$ qui peut être substitué par un ou plusieurs groupes OH, et dans lequel la chaîne peut être interrompue par un ou plusieurs groupes éther, ester ou cétone; un groupe hydrocarboné aromatique en $C_6$-$C_{16}$ ou un groupe hydrocarboné cyclique en $C_4$-$C_{16}$;

$R_e$ peut former avec un des groupes $R_a$ ou $R_b$, un cycle en $C_5$-$C_{10}$ qui peut être substitué par un ou plusieurs groupes alkyle linéaires ou ramifiés en $C_1$-$C_4$ ou un ou plusieurs groupes alkylène en $C_2$-$C_4$;

$R_c$ et $R_d$ peuvent former un cycle en $C_5$-$C_{10}$ qui peut être substitué par un ou plusieurs groupes alkyle en $C_1$-$C_4$ ou groupes alkylène en $C_2$-$C_4$; deux ou plus des atomes de carbone du cycle en $C_5$-$C_{10}$ formés avec $R_a$ ou $R_b$ et Re ou avec $R_c$ et $R_d$, peuvent être liés par un pont hydrocarboné.

Selon l'invention, le groupe alkyle en $C_1$-$C_6$ représente de préférence un groupe méthyle ou éthyle.

Les monomères (III) particulièrement recommandés sont l'alcool allylique, l'alcool méthallylique, l'alcool crotylique, le 2-cyclohexène-1-ol, le trans-2-hexène-1-ol, le cis-2-butène-1,4-diol, le 3-méthyl-2-butène-1-ol, le trans-2-méthyl-3-phényl-2-propane-1-ol, le 3-butène-2-ol, le carvéol, le myrténol, le verbénol et l'alcool trans-cinamylique.

La quantité de monomères (III) dans les compositions selon l'invention est comprise entre 0,1 et 15 parties en poids pour 100 parties en poids de composant A, de préférence de 1 à 5 parties en poids.

La polymérisation s'effectue de manière connue en utilisant un mélange initial contenant les divers monomères de la composition polymérisable, la réaction de polymérisation étant catalysable en utilisant des catalyseurs tels que du peroxyde de benzoyle, du peroxydicarbonate de cyclohexyle, du peroxydicarbonate de diisopropyle ou le 2,2'-azobisisobutyronitrile, ou des photoinitiateurs tels que benzoïnéthyléther, 2,4,6-triméthylbenzoyldiphénylphosphine, 1-hydroxycyclohexylphénylcétone.

On a préparé des lentilles ophtalmiques en introduisant la composition voulue contenant les divers monomères décrits ci-dessus dans un appareil constitué par un moule en verre en deux parties et en effectuant une polymérisation par irradiation UV.

La lentille polymère ainsi produite est ensuite recuite pendant une période et à une température suffisantes pour

éliminer les contraintes résiduelles de la lentille. La température est généralement comprise entre 100 et 120°C et le recuit est effectué pendant environ 1 à 5 heures.

Il est également possible de procéder à la polymérisation dans des moules ayant une face à la géométrie finale de la lentille et une deuxième face qui elle n'est pas réglée en fonction de la géométrie de la surface de la lentille finale et permet de préparer une seconde face qui peut être surfacée à la demande.

L'invention a également pour objet la composition polymérisable telle que définie ci-dessus dans son application à la préparation de compositions polymères.

Les polymères ainsi obtenus, notamment à la suite du moulage, peuvent être utilisés pour la réalisation d'éléments ophtalmiques tels que des lentilles ophtalmiques, des verres de lunettes ou pour des lentilles utilisées dans des viseurs, des optiques d'appareils divers tels qu'appareil photo, caméra, microscope.

La détermination de l'indice de jaune est effectuée par voie spectroscopique. Pour la voie spectroscopique, on utilise une méthode standardisée (ASTM D-1925-63), d'indice de jaune est défini de la façon suivante :

$$Yi = \frac{(127{,}5\ X - 105..8\ Z)}{Y}$$

où X, Y, Z sont les coordonnées trichromatiques de l'échantillon, mesuré par spectrophotomètre UV visible sur l'ensemble du spectre entre 380 et 780 nanomètres. La valeur Yi est donnée après recuit.

Les exemples suivants sont destinés à illustrer l'invention sans pour autant présenter un caractère limitatif.

On prépare dans chaque cas un mélange primaire par homogénéisation des quantités des monomères comme indiqué dans le TABLEAU 1 ci-dessous.

TABLEAU 1

| | MELANGE N° | | | | | | | |
|---|---|---|---|---|---|---|---|---|
| | 1 | 2 | 3 | 4 | 5 | 6 | 7 | 8 |
| BMATPS | 20 | 25 | 28 | - | - | - | - | - |
| BMATES | - | - | 30 | 35 | 40 | 33 | 30 | 100 |
| EBADMA | 40 | 40 | 25 | 55 | 22 | 32 | 40 | - |
| DBADMA | - | - | - | - | 20 | 10 | - | - |
| OBADMA | - | - | 7 | - | - | 10 | 15 | - |
| BMA | 10 | 10 | - | 5 | - | - | 9 | - |
| TBrBEA | 10 | - | 10 | 5 | 8 | - | - | - |
| PBOMA | 20 | 25 | - | - | - | - | - | - |
| AMP | - | - | - | - | 10 | - | - | - |
| FA-513 | - | - | - | - | - | 10 | - | - |
| R-604 | - | - | - | - | - | 5 | 6 | - |

BMATPS = bis(4-méthacryloylthiophényl)sulfure
BMATES = bis(2-méthacryloylthioéthyl)sulfure
EBADMA = composé de formule (IV) avec $R_1$=$CH_3$, $R_2$=H et m+n=2,6
DBADMA = composé de formule (IV) avec $R_1$=$CH_3$, $R_2$=H et m+n=4
OBADMA = composé de formule (IV) avec $R_1$=$CH_3$, $R_2$=H et m+n=10
BMA = benzylméthacrylate
TBrBEA = tribromobenzyléthoxyacrylate
PBOMA = polybutylèneglycoldiméthacrylate
AMP = phénoxyéthylacrylate

FA-513 = 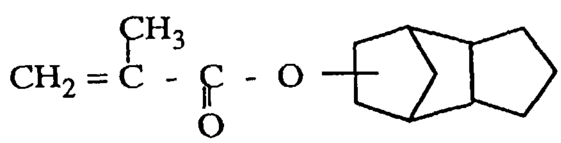

R-604 = 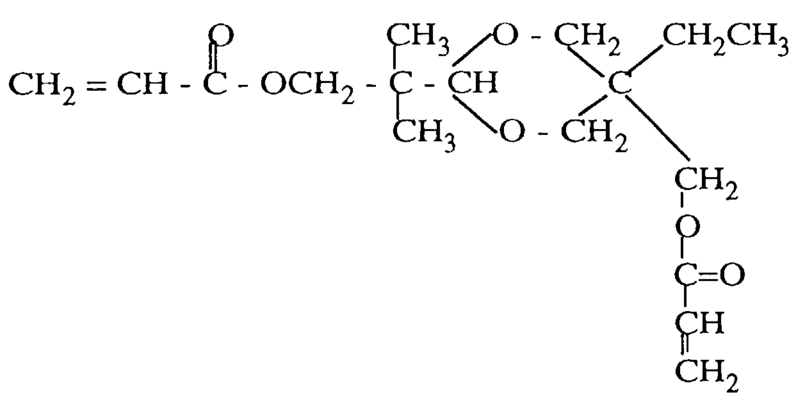

Comme le bis(4-méthacryloylthiophényl)sulfure (BMATPS) est une poudre blanche à température ambiante, les

mélanges incluant ce monomère ont été fabriqués par dissolution des monomères dans un solvant approprié. (Ce solvant peut en fait être constitué par les autres monomères du mélange et en particulier, par le comonomère II).

EXEMPLES 1 à 16

On a réalisé des lentilles à partir des mélanges du TABLEAU 1 en ajoutant à ces mélanges, comme photo-initiateur, 0,070 parties en poids de APO et 0,035 parties en poids d'Irgacure®184 pour 100 parties en poids de mélange. Le photo-initiateur APO est l'oxyde de 2,4,6-triméthylbenzoyldiphénylphosphine de formule :

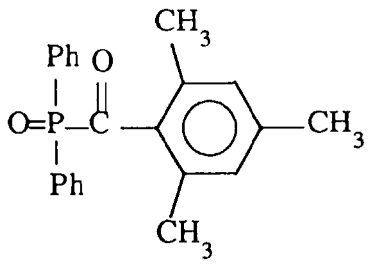

et l'Irgacure® 184 est la 1-hydroxycyclohexylphényl cétone de formule :

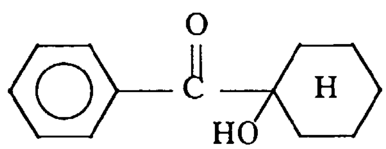

On a également réalisé des lentilles à partir des compositions du TABLEAU 1 en y ajoutant, comme indiqué ci-dessus, les photo-initiateurs et comme agent anti-jaune 2 parties en poids de 3-méthyl 2-butène-1-ol pour 100 parties en poids de mélanges.

Les lentilles ont été obtenues par polymérisation des mélanges ci-dessus par irradiation UV.

On a ensuite fait subir aux lentilles obtenues un recuit à une température de 110°C pendant 2 heures.

Sauf indication contraire, les lentilles obtenues étaient des lentilles -2,00 D. L'épaisseur des lentilles a été mesurée au centre de celles-ci.

On a mesuré pour chacune des lentilles obtenues l'indice de jaune avant recuit et après recuit.

Les compositions des lentilles, épaisseur, indice de jaune avant recuit, indice de jaune après recuit, indice de réfraction, transmittance, densité et nombre d'Abbe sont donnés dans le TABLEAU 2 ci-après.

TABLEAU 2

| Exemple n° | Composition | Epaisseur (mm) | Indice de jaune avant recuit | Indice de jaune après recuit | Indice de réfraction | Transmission | Densité | Nombre d'Abbe |
|---|---|---|---|---|---|---|---|---|
| 1* | Mélange 1 | 1,4 | 7,02 | 3,21 | 1,58 | 90 | 1,24 | 34 |
| 2 | Mélange 1 + 2 parties en poids 3-méthyl-2-butène-1-ol | 1,4 | 2,98 | 2,85 | - | - | - | - |
| 3* | Mélange 2 | 1,6 | 11,56 | 3,60 | 1,58 | 90 | 1,18 | 35 |
| 4 | Mélange 2 + 2 parties en poids 3-méthyl-2-butène-1-ol | 1,5 | 3,71 | 3,19 | - | - | - | - |
| 5* | Mélange 3 | 1,6 | 14,09 | 3,32 | 1,62 | 89 | 1,32 | 33 |
| 6 | Mélange 3 + 2 parties en poids 3-méthyl-2-butène-1-ol | 1,4 | 4,66 | 2,27 | - | - | - | - |
| 7* | Mélange 4 | 1,3 | 1,84 | 1,12 | 1,591 | 90 | 1,27 | 41,5 |
| 8 | Mélange 4 + 2 parties en poids 3-méthyl-2-butène-1-ol | 1,0 | 0,9 | 0,87 | - | - | - | - |
| | | 1,6 | 1,05 | 1,05 | - | - | - | - |
| 9* | Mélange 5 | 1,0 | 1,19 | 1,17 | 1,592 | 90 | 1,29 | 36 |
| 10 | Mélange 5 + 2 parties en poids 3-méthyl-2-butène-1-ol | 0,8 | 0,90 | 0,86 | - | - | - | - |
| | | 1,3 | 1,04 | 1,04 | - | - | - | - |
| 11* | Mélange 6 | 1,0 a | 1,21 | 1,05 | 1,580 | 90 | 1,21 | 37,5 |
| | | 2,4 | 1,44 | 1,39 | - | - | - | - |
| 12 | Mélange 6 + 2 parties en poids 3-méthyl-2-butène-1-ol | 0,9 | 0,87 | 0,87 | - | - | - | - |
| | | 2,4 a | 1,17 | 1,18 | - | - | - | - |
| 13* | Mélange 7 | 2,3 | 1,41 | 1,38 | 1,578 | 90 | 1,23 | 39 |
| 14 | Mélange 7 + 2 parties en poids 3-méthyl-2-butène-1-ol | 2,2 | 1,17 | 1,20 | - | - | - | - |
| 15* | Mélange 8 | 2,9 | 4,06 | 2,18 | 1,624 | 89 | 1,31 | 35 |
| 16 | Mélange 8 + 2 parties en poids 3-méthyl-2-butène-1-ol | 2,8 | 1,62 | 1,29 | - | - | - | - |

a = lentille plane

* = comparatif

Comme le montre le TABLEAU 2, les compositions selon l'invention permettent d'obtenir des lentilles ayant des indices de réfraction élevés de l'ordre de 1,6 et même plus, et un très faible indice de jaune.

EXEMPLES 17 à 20

Les exemples ci-après concernent la comparaison de l'indice de jaune pour des lentilles obtenues à partir de certains des mélanges décrits précédemment et de manière identique, mais pour des teneurs différentes en photo-initiateur.

Les lentilles ont été obtenues de la même manière que précédemment et les résultats ainsi que les teneurs en photo-initiateurs sont indiqués dans le TABLEAU 3 ci-après.

TABLEAU 3

| Exemple n° | Composition | Teneur en photo-initiateur | | Epaisseur (mm) | YI après recuit |
|---|---|---|---|---|---|
| | | APO | Irgacure 184 | | |
| | | (parties en poids) | | | |
| 17 | Mélange 4 | 0,4 | 0,4 | 1,4 | 1,61 |
| 18 | Mélange 4 + 2 parties en poids 3-méthyl-2-butène-1-ol | 0,4 | 0,4 | 1,2 | 1,05 |
| 19 | Mélange 6 | 0,2 | 0,2 | 1,4 | 1,17 |
| 20 | Mélange 6 + 2 parties en poids 3-méthyl-2-butène-1-ol | 0,2 | 0,2 | 1,45 | 0,95 |

Comme le montre le TABLEAU 3, l'indice de jaune n'est que faiblement accru lorsqu'on accroît les teneurs en photo-initiateurs, ce qui permet d'accroître notablement les vitesses de polymérisation des compositions selon l'invention sans nuire à l'indice de jaune des compositions polymérisées obtenues.

EXEMPLE 21 et EXEMPLE COMPARATIF 22

On a fabriqué des lentilles ayant une puissance de -2,00 dioptries et une épaisseur, au centre, de 1,35 mm par polymérisation du mélange n°4 avec 2% en poids de 3-méthyl-2-butène-1-ol (Exemple 21) et sans additif anti-jaune (Exemple comparatif 22).

Les deux lentilles ont été obtenues en coulant les mélanges liquides dans un moule constitué de deux parties de moule en verre minéral maintenues entre elles par un ruban adhésif à leur périphérie. On a ensuite irradié les moules des deux côtés avec un rayonnement de 80 W/cm$^2$ produit par des lampes ultraviolettes pendant environ 3 miniutes.

Après ce traitement de polymérisation, les lentilles formées étaient démoulées et soumises à un recuit de 120°C pendant 2 heures. Les deux lentilles, avec et sans agent anti-jaune, ont été insolées pendant 40 heures, dans les mêmes conditions, avec un appareil SUNTEST HANAU émettant un rayonnement d'une puissance de 24,4 W/m$^2$ dans le domaine spectral de 300-400 nm.

Les résultats de cette insolation sont donnés dans le tableau 4 ci-dessous.

TABLEAU 4

| | Exemple 21 | Exemple comparatif 22 |
|---|---|---|
| Indice de jaune avant insolation | 0,80 | 1,10 |
| Indice de jaune après 40 heures d'insolation | 0,24 | 1,60 |
| $\Delta$ YI | 0,14 | 0,50 |

Les résultats ci-dessus montrent que des lentilles fabriquées à partir de compositions selon l'invention ont une résistance au jaunissement sous l'effet d'une insolation nettement supérieure par rapport à des lentilles fabriquées à partir de compositions similaires ne contenant pas d'agent anti-jaune selon l'invention.

**Revendications**

**1.** Composition polymère transparente comprenant :

un *composant A* comprenant :

- au moins 10% en poids d'un monomère ou d'un mélange de monomères (I), comportant au moins une fonction thioacrylate ou thiométhacrylate;
- 0 à 90% en poids d'un ou plusieurs monomères (II) copolymérisables par voie radicalaire, préférentiellement vinyle, acrylique ou méthacrylique mono- ou polyfonctionnels; et

*un composant B* comprenant, par rapport au poids du composant A :

- 0,1 à 15% en poids d'un ou plusieurs monomères (III) comportant une insaturation éthylénique qui ne contribue pas à un système aromatique et ayant un carbone en position α par rapport à l'insaturation éthylénique portant un groupe hydroxy libre.

**2.** Composition polymère selon la revendication 1, caractérisée en ce que le monomère (III) contient en position α de l'insaturation, un atome de carbone portant un groupe hydroxy libre et qui est lié à au moins un atome d'hydrogène.

**3.** Composition polymère selon la revendication 1, caractérisée en ce que le monomère (III) répond à la formule :

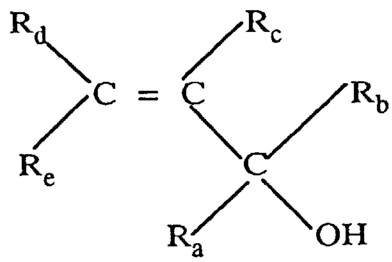

dans laquelle :

$R_a$ et $R_b$ représentent l'hydrogène ou l'un des groupes $R_a$ et $R_b$ représente l'hydrogène, cependant que l'autre forme avec le groupe $R_e$ un cycle en $C_5$-$C_{10}$ qui peut être substitué par un ou plusieurs groupes alkyle linéaires ou ramifiés en $C_1$-$C_4$ ou un ou plusieurs groupes alkylène en $C_2$-$C_4$; ou un des groupes $R_a$ et $R_b$ peut représenter l'hydrogène, cependant que l'autre représente un groupe alkyle aliphatique en $C_1$-$C_6$, un groupe hydrocarboné cyclique en $C_4$-$C_{16}$ ou un groupe hydrocarboné aromatique en $C_6$-$C_{16}$;
$R_c$, $R_d$ et $R_e$ représentent, indépendamment les uns des autres, l'hydrogène ou un groupe alkyle en $C_1$-$C_6$ qui peut être substitué par un ou plusieurs groupes OH, et dans lequel la chaîne peut être interrompue par un ou plusieurs groupes éther, ester ou cétone; un groupe hydrocarboné aromatique en $C_6$-$C_{16}$ ou un groupe hydrocarboné cyclique en $C_4$-$C_{16}$;
$R_e$ peut former avec un des groupes $R_a$ ou $R_b$, un cycle en $C_5$-$C_{10}$ qui peut être substitué par un ou plusieurs groupes alkyle linéaires ou ramifiés en $C_1$-$C_4$ ou un ou plusieurs groupes alkylène en $C_2$-$C_4$;
$R_c$ et $R_d$ peuvent former un cycle en $C_5$-$C_{10}$ qui peut être substitué par un ou plusieurs groupes alkyle en $C_1$-$C_4$ ou groupes alkylène en $C_2$-$C_4$; deux ou plus des atomes de carbone du cycle en $C_5$-$C_{10}$ formé avec $R_a$ ou $R_b$ et $R_e$ ou avec $R_c$ et $R_d$, peuvent être liés par un pont hydrocarboné.

**4.** Composition polymère selon la revendication 3, caractérisée en ce que $R_a$ et $R_b$ représentent l'hydrogène, $R_c$ représente un groupe méthyle, $R_d$ représente l'hydrogène ou un groupe méthyle et $R_e$ représente l'hydrogène, un groupe méthyle, un groupe éthyle ou $-CH_2OH$.

**5.** Composition polymère selon la revendication 3, caractérisée en ce que le monomère (III) est choisi dans le groupe se composant de l'alcool allylique, l'alcool méthallylique, l'alcool crotylique, le 2-cyclohexéne-1-ol, le trans-2-hexène-1-ol, le cis-2-butène-1,4-diol, le 3-méthyl-2-butène-1-ol, le trans-2-méthyl-3-phényl-2-propène-1-ol, le 3-butène-2-ol, le carvéol, le myrténol, le verbénol et l'alcool trans-cinamylique.

**6.** Composition selon l'une quelconque des revendications précédentes, caractérisée en ce que le monomère (I) répond à la formule :

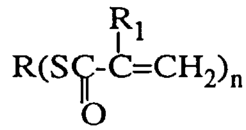

dans laquelle :

R représente un radical hydrocarboné aliphatique, linéaire ou ramifié, monovalent ou polyvalent, ou un groupement aryle lié à l'atome de soufre du ou des groupements thio(méth)acrylates par un noyau aromatique ou par l'intermédiaire d'une chaîne alkyle linéaire, le radical R pouvant comporter dans sa chaîne un ou plusieurs groupes choisis parmi -O-, -S- et

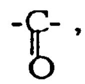

$R_1$ représente l'hydrogène ou $-CH_3$; et
n est un entier de 1 à 6.

7. Composition selon la revendication 6, caractérisée en ce que n est un entier de 1 à 3.

8. Composition polymère selon l'une quelconque des revendications 1 à 7, caractérisée en ce que les monomères (I) sont choisis parmi :

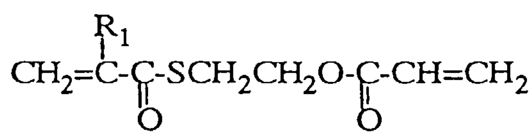

S-2-acryloyloxyéthylthio(méth)acrylate,

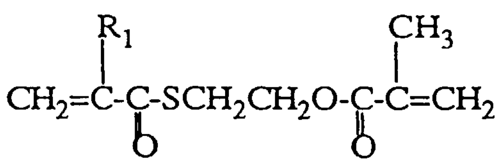

S-2-methacryloyloxyéthylthio(méth)acrylate,

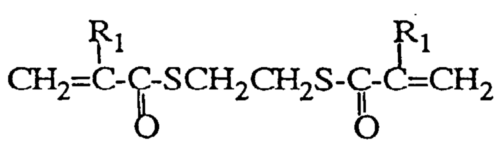

1,2-bis[(méth)acryloylthio]éthane,

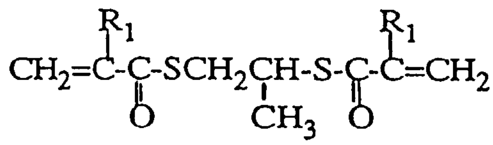

1,2-bis[(méth)acryloylthio]propane,

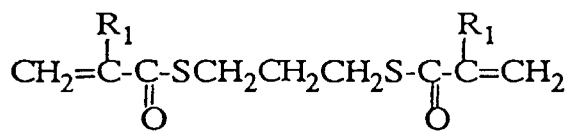

1,3-bis[(méth)acryloylthio]propane,

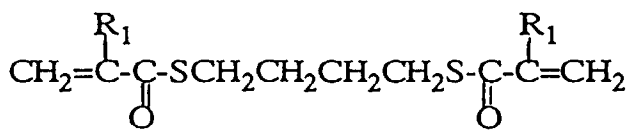

1,4-bis[(méth)acryloylthio]butane,

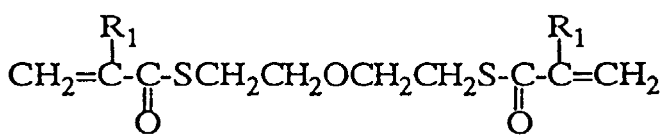

bis-2-[(méth)acryloylthioéthyl]éther,

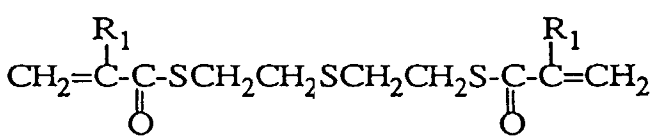

bis-2-[(méth)acryloylthioéthyl]sulfure,

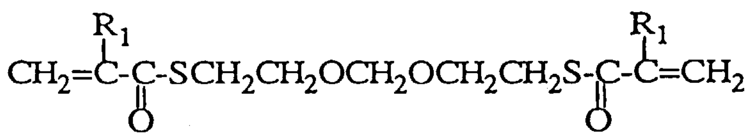

bis-2-[(méth)acryloylthioéthoxy]méthane,

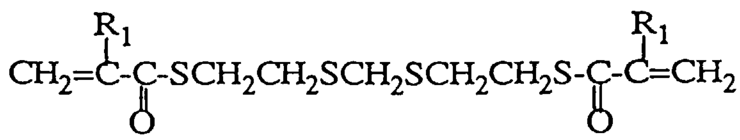

bis-2-[(méth)acryloylthioéthylthio]méthane,

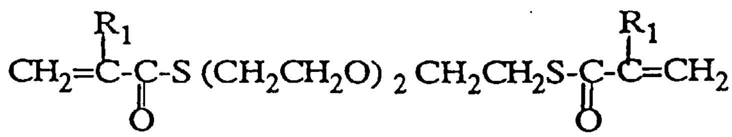

1,2-bis-[2-(méth)acryloylthioéthoxy]éthane,

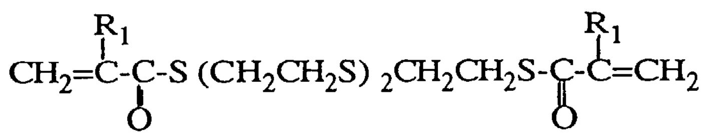

1,2-bis-[2-(méth)acryloylthioéthylthio]éthane,

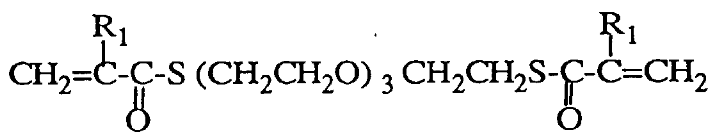

bis-[2-(2-(méth)acryloylthioéthoxy)éthyl]éther,

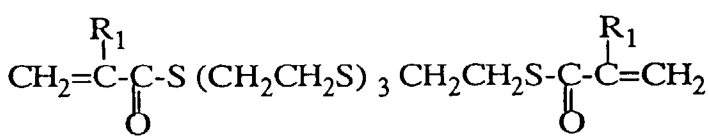

bis-[2-(2-(méth)acryloylthioéthylthio)éthyl]sulfure,

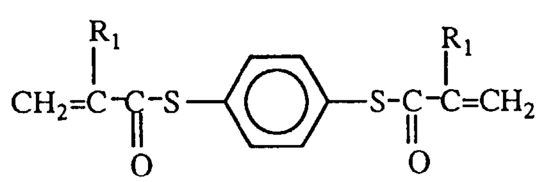

1,4-bis[(méth)acryloylthio]benzène,

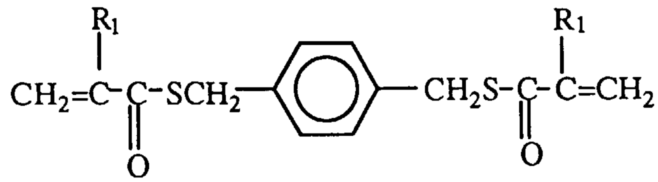

1,4-bis[(méth)acryloylthiométhyl]benzène,

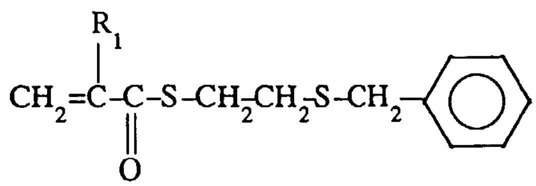

Benzylthioéthylthio(méth)acrylate,

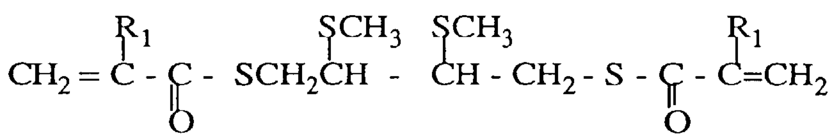

1,4-[bis(méth)acryloylthio]-2,3-diméthylthiobutane,

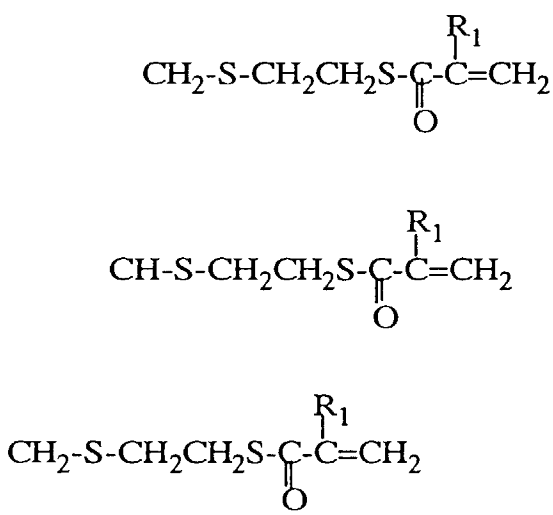

1,2,3-tris[(méth)acryloylthioéthyl]thiolpropane,

et

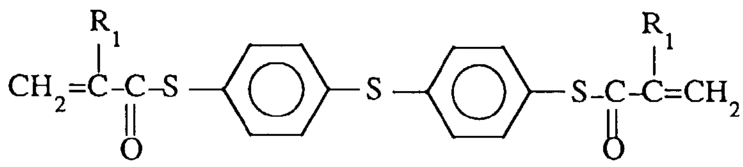

bis[(méth)acryloylthiophényl]sulfure.

**9.** Composition polymère selon l'une quelconque des revendications précédentes, caractérisée en ce que les monomères (I) représentent 20 à 60% en poids du composant A.

**10.** Composition polymère selon l'une quelconque des revendications précédentes, caractérisée en ce que les comonomères (II) sont choisis parmi les comonomères vinyle, acrylique ou méthacrylique, mono- ou polyvalents.

**11.** Composition polymère selon la revendication 10, caractérisée en ce que le composant A comprend un mélange de comonomères (II), un au moins de ces comonomères étant un comonomère de formule (IV) :

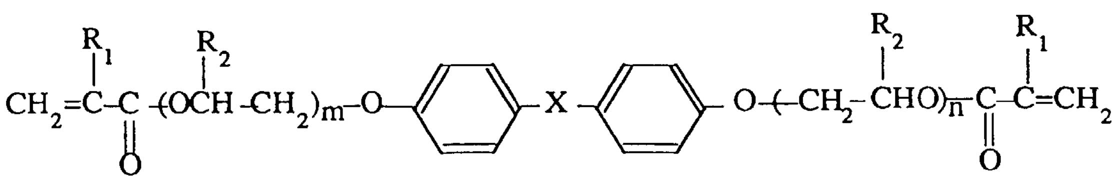

dans laquelle $R_1$ et $R_2$ désignent indépendamment l'un de l'autre, hydrogène ou un radical alkyle inférieur en $C_1$-$C_6$, X désigne O, S, CO, $SO_2$, $-CH_2-$, -CH=CH- ou

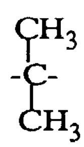

la somme m + n est comprise entre 0 et 10, inclus.

**12.** Composition polymère selon la revendication 10, caractérisée en ce que le ou les comonomères de formule (IV) représentent moins de 50% en poids du composant A.

**13.** Composition polymérisable pour lentille, caractérisée en ce qu'elle comprend :
un *composant A* comprenant :

- au moins 10% en poids d'un monomère ou d'un mélange de monomères (I), comportant au moins une fonction thioacrylate ou thiométhacrylate;
- 0 à 90% en poids d'un ou plusieurs comonomères (II) vinyle, acrylique ou méthacrylique mono- ou polyfonctionnels; et

*un composant B* comprenant, par rapport au poids du composant A :

- 0,1 à 15% en poids d'un ou plusieurs monomères (III) comportant une insaturation éthylénique qui ne contribue pas à un système aromatique et ayant un carbone en position α par rapport à l'insaturation éthylénique portant un groupe hydroxy libre.

**14.** Composition polymérisable pour lentille selon la revendication 13, caractérisée en ce qu'elle comprend des monomères (I), (II) ou (III) répondant à la définition de l'une quelconque des revendications 2 à 12.

**15.** Procédé de préparation de la composition polymère définie dans l'une quelconque des revendications 1 à 12, caractérisé en ce qu'on mélange le composant A en présence d'un amorceur ou catalyseur de polymérisation et qu'on ajoute 0,1 à 15% en poids, par rapport au poids de composant A, de composant B, et que l'on procède à la polymérisation.

**16.** Procédé de préparation de la composition polymère selon la revendication 15, caractérisé en ce que l'on procède à la polymérisation par voie photochimique.

**17.** Procédé de fabrication d'une lentille finie ou semi-finie, caractérisé par le fait que l'on procède à la coulée de la composition polymérisable selon l'une quelconque des revendications 13 ou 14 entre deux moules présentant les géométries de surface requises puis que l'on procède à la polymérisation telle que définie dans la revendication 15 ou 16, suivie d'un recuit.

**18.** Lentille ophtalmique constituée par une composition polymère selon l'une quelconque des revendications 1 à 12.

**19.** Lentille ophtalmique constituée d'un polymère résultant de la polymérisation de la composition polymérisable telle que définie dans la revendication 15 ou 16 ou obtenue selon le procédé de la revendication 15 ou 16.

**20.** Utilisation de la composition polymère selon l'une quelconque des revendications 1 à 12, pour la fabrication de lentilles ophtalmiques ou de lentilles destinées à des viseurs ou des optiques d'appareils.

**21.** Utilisation d'une lentille telle que définie dans la revendication 18 ou 19, pour la fabrication de verres pour lunettes ou d'optiques diverses.

**22.** Verre de lunettes caractérisé par le fait qu'il est constitué d'une lentille telle que définie dans la revendication 18 ou 19.

**23.** Objectif caractérisé par le fait qu'il comprend au moins une lentille telle que définie dans l'une quelconque des revendications 18 ou 19.

**Patentansprüche**

**1.** Transparente Polymerzusammensetzung, umfassend:
eine Komponente A, umfassend:

- mindestens 10 Gew.-% von einem Monomeren oder einer Monomerenmischung (I), enthaltend wenigstens eine Thioacrylat- oder Thiomethacrylatfunktion;
- 0 bis 90 Gew.-% von einem oder mehreren vorzugsweise vinylischen, acrylischen oder methacrylischen, mono- oder polyfunktionellen, radikalisch copolymerisierbaren Monomeren (II); und

eine Komponente B, enthaltend in bezug auf das Gewicht der Komponente A:

- 0,1 bis 15 Gew.-% von einem oder mehreren eine ethylenische Ungesättigtheit aufweisenden Monomeren (III), welche nicht zu einem aromatischen System beiträgt und ein Kohlenstoffatom in α-Stellung zur ethylenischen Ungesättigtheit aufweist, welches eine freie Hydroxygruppe trägt.

**2.** Polymerzusammensetzung nach Anspruch 1, dadurch gekennzeichnet, daß das Monomer (III) in α-Stellung zur Ungesättigtheit ein Kohlenstoffatom aufweist, welches eine freie Hydroxygruppe trägt und welches an wenigstens ein Wasserstoffatom gebunden ist.

**3.** Polymerzusammensetzung nach Anspruch 1, dadurch gekennzeichnet, daß das Monomer (III) der Formel

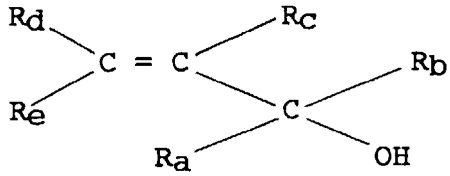

genügt, in welcher:

$R_a$ und $R_b$ Wasserstoff bedeuten oder eine der Gruppen $R_a$ und $R_b$ Wasserstoff bedeutet, während die andere mit der Gruppe $R_e$ einen $C_5$-$C_{10}$-Ring bildet, welcher durch eine oder mehrere lineare oder verzweigte $C_1$-$C_4$-Alkylgruppen oder eine oder mehrere $C_2$-$C_4$-Alkylengruppen substituiert sein kann; oder eine der Gruppen $R_a$ und $R_b$ Wasserstoff darstellen kann, während die andere eine aliphatische $C_1$-$C_6$-Alkylgruppe, eine cyklische $C_4$-$C_{16}$-Kohlenwasserstoffgruppe oder eine aromatische $C_6$-$C_{16}$-Kohlenwasserstoffgruppe darstellt;

$R_c$, $R_d$ und $R_e$ unabhängig voneinander Wasserstoff oder eine $C_1$-$C_6$-Alkylgruppe, welche durch eine oder mehrere OH-Gruppen substituiert sein kann und in welchen die Kette durch eine oder mehrere Ether-, Ester- oder Ketongruppen unterbrochen sein kann, eine aromatische $C_6$-$C_{16}$-Kohlenwasserstoffgruppe oder eine cyklische $C_4$-$C_{16}$-Kohlenwasserstoffgruppe bedeuten;

$R_e$ mit einer der Gruppen $R_a$ oder $R_b$ einen $C_5$-$C_{10}$-Cyklus bilden kann, welcher durch eine oder mehrere lineare oder verzweigte $C_1$-$C_4$-Alkylgruppen oder eine oder mehrere $C_2$-$C_4$-Alkylengruppen substituiert sein kann;

$R_c$ und $R_d$ einen $C_5$-$C_{10}$-Cyklus bilden können, welcher durch eine oder mehrere $C_1$-$C_{14}$-Alkylgruppen oder $C_2$-$C_4$-Alkylengruppen substituiert sein kann, wobei zwei oder mehrere Kohlenstoffatome des $C_5$-$C_{10}$-Cyklus, welcher mit $R_a$ oder $R_b$ und $R_e$ oder mit $R_c$ und $R_d$ gebildet ist, durch eine Kohlenwasserstoffbrücke verbunden sein können.

**4.** Polymerzusammensetzung nach Anspruch 3, dadurch gekennzeichnet, daß $R_a$ und $R_b$ Wasserstoff bedeuten, $R_c$ eine Methylgruppe darstellt, $R_c$ Wasserstoff oder eine Methylgruppe darstellt und $R_e$ Wasserstoff, eine Methylgruppe, eine Ethylgruppe oder eine $-CH_2OH$-Gruppe darstellt.

**5.** Polymerzusammensetzung nach Anspruch 3, dadurch gekennzeichnet, daß das Monomer (III) aus der Gruppe umfassend Allylalkohol, Methallylalkohol, Crotylalkohol, 2-Cyclohexen-1-ol, trans-2-Hexen-1-ol, cis-2-Buten-1,4-diol, 3-Methyl-2-buten-1-ol, trans-2-Methyl-3-phenyl-2-propen-1-ol, 3-Buten-2-ol, Carveol, Myrtenol, Verbenol und Transcinamylalkohol gewählt ist.

**6.** Zusammensetzung nach einem der vorhergehenden Ansprüche, dadurch gekennzeichnet, daß das Monomer (I) der Formel

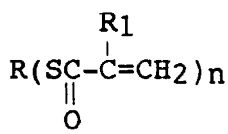

genügt, in welcher

R ein aliphatischer, linearer oder verzweigter, mono- oder polyvalenter Kohlenwasserstoffrest oder eine an das Schwefelatom der Thio(meth)acrylatgruppe(n) über einen aromatischen Kern oder über eine lineare Alkylkette gebundene Arylgruppe sind, wobei der Rest R in seiner Kette eine oder mehrere Gruppen, welche aus -O-, -S- und

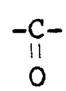

gewählt ist, darstellt;
$R_1$ Wasserstoff oder $-CH_3$ bedeutet; und
n eine ganze Zahl von 1 bis 6 ist.

**7.** Zusammensetzung nach Anspruch 6, dadurch gekennzeichnet, daß n eine ganze Zahl von 1 bis 3 ist.

**8.** Polymerzusammensetzung nach einem der Ansprüche 1 bis 7, dadurch gekennzeichnet, daß die Monomere (I) gewählt sind aus:

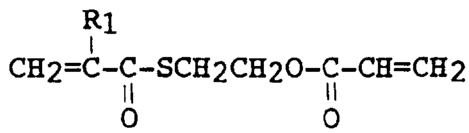

S-2-Acryloyloxyethylthio(meth)acrylat,

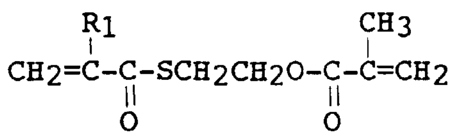

S-2-Methacryloyloxyethylthio(meth)acrylat,

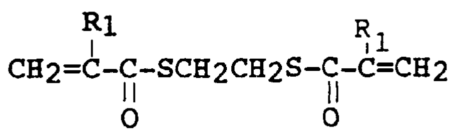

1,2-Bis[(meth)acryloylthio]ethan,

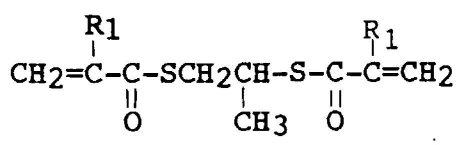

1,2-Bis[(meth)acryloylthio]propan,

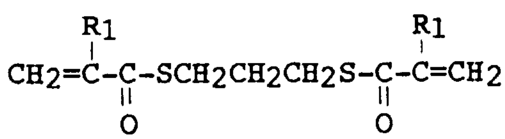

1,3-Bis[(meth)acryloylthio]propan,

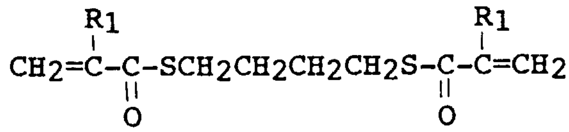

1,4-Bis[(meth)acryloylthio]butan,

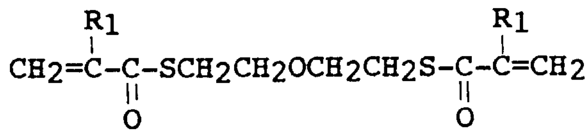

Bis-2-[(meth)acryloylthioethyl]ether,

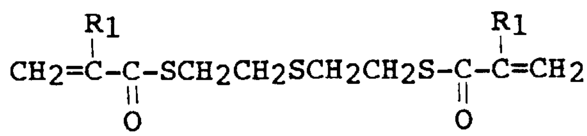

Bis-2-[(meth)acryloylthioethyl]sulfid,

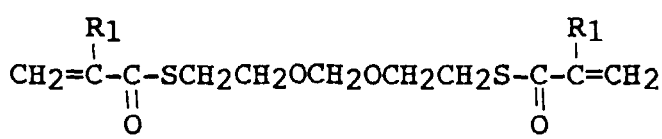

Bis-2-[(meth)acryloylthioethoxy]methan,

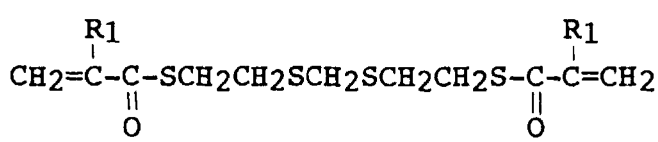

Bis-2-[(meth)acryloylthioethylthio]methan,

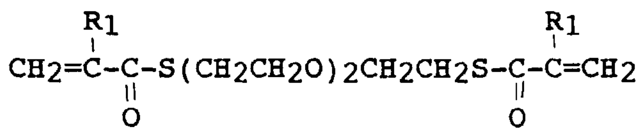

1,2-Bis-[2-(meth)acryloylthioethoxy]ethan,

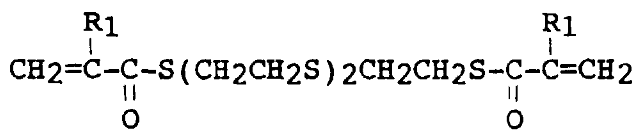

1,2-Bis-[2-(meth)acryloylthioethylthio]ethan,

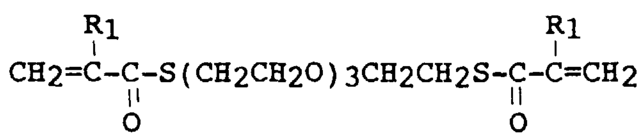

Bis-[2-(2-(meth)acryloylthioethoxy)ethyl]ether,

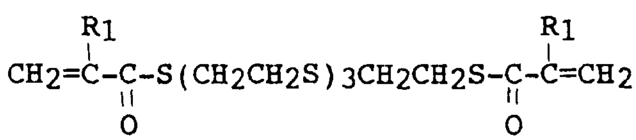

Bis-[2-(2-(meth)acryloylthioethylthio)ethyl]sulfid,

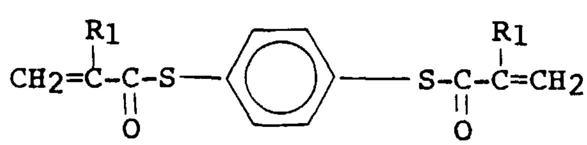

1,4-Bis[(meth)acryloylthio]benzol,

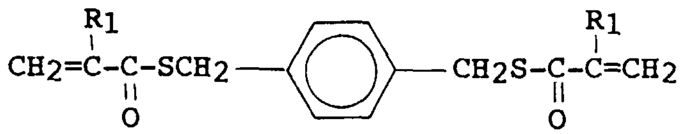

1,4-Bis[(meth)acryloylthiomethyl]benzol,

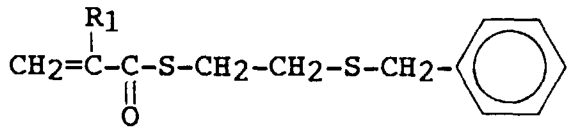

Benzylthioethylthio(meth)acrylat,

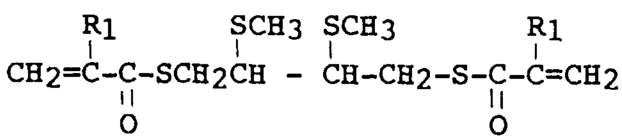

1,4-[Bis(meth)acryloylthio]-2,3-dimethylthiobutan,

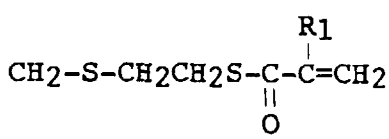

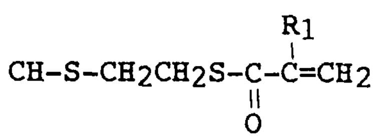

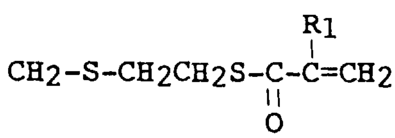

1,2,3-Tris[(meth)acryloylthioethyl]thiolpropan

und

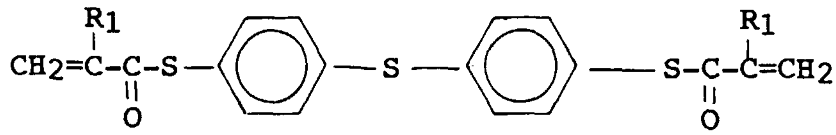

Bis[(meth)acryloylthiophenyl]sulfid.

9. Polymerzusammensetzung nach einem der vorhergehenden Ansprüche, dadurch gekennzeichnet, daß die Monomere (I) 20 bis 60 Gew.-% der Komponente A darstellen.

10. Polymerzusammensetzung nach einem der vorhergehenden Ansprüche, dadurch gekennzeichnet, daß die Comonomere (II) unter den vinylischen, acrylischen oder methacrylischen, mono- oder polyvalenten Comonomeren gewählt sind.

11. Polyerzusammensetzung nach Anspruch 10, dadurch gekennzeichnet, daß die Komponente A eine Mischung von Comonomeren (II) umfaßt, wobei mindestens eines dieser Comonomere ein Comonomer der Formel (IV) ist:

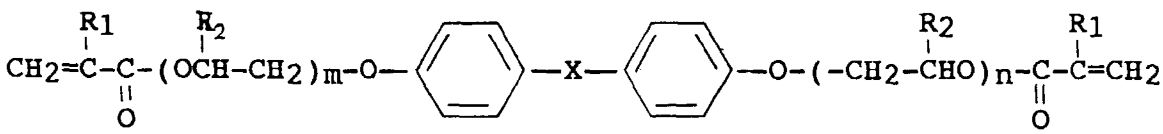

in welcher $R_1$ und $R_2$ unabhängig voneinander Wasserstoff oder einen niedrigen $C_1$-$C_6$-Alkylrest bedeuten, X O, S, Co, $SO_2$, $-CH_2-$, -CH=CH- oder

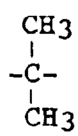

bedeutet,
die Summe m + n zwischen 0 und einschließlich 10 liegt.

12. Polymerzusammensetzung nach Anspruch 10, dadurch gekennzeichnet, daß das oder die Comonomere der Formel (IV) mindestens 50 Gew.-% der Komponente A darstellen.

13. Polyermerisierbare Zusammensetzung für eine Linse, dadurch gekennzeichnet, daß sie umfaßt:
eine Komponente A, enthaltend:

- mindestens 10 Gew.-% von einem Monomeren oder einer Monomerenmischung (I), enthaltend mindestens eine Thioacrylat- oder Thiomethacrylatfunktion;
- 0 bis 90 Gew.-% eines oder mehrerer vinylischer, acrylischer oder methacrylischer, mono- oder polyfunktionellen Comonomere (II); und

eine Komponente B, umfassend in bezug auf das Gewicht der Komponente A:

- 0,1 bis 15 Gew.-% von einem oder mehreren Monomeren (III), enthaltend eine ethylenische Ungesättigtheit, welche nicht zu einem aromatischen System beiträgt und ein Kohlenstoffatom in α-Stellung in bezug auf die ethylenische Ungesättigtheit aufweist, welches eine freie Hydroxygruppe trägt.

14. Polyermisierbare Zusammensetzung für eine Linse nach Anspruch 13, dadurch gekennzeichnet, daß sie Monomere (I), (II) oder (III) enthält, welche der Definition von einem der Ansprüche 2 bis 12 genügen.

**15.** Verfahren zur Herstellung einer in einem der Ansprüche 1 bis 12 definierten Polymerzusammensetzung, dadurch gekennzeichnet, daß die Komponente A in Gegenwart von einem Initiator oder einem Polymerisationskatalysator gemischt wird und daß 0,1 bis 15 Gew.-% der Komponente B in bezug auf das Gewicht der Komponente A beigefügt werden und daß die Polymerisation durchgeführt wird.

**16.** Herstellungsverfahren der Polymerzusammensetzung nach Anspruch 15, dadurch gekennzeichnet, daß die Polymerisation auf photochemischem Weg durchgeführt wird.

**17.** Herstellungsverfahren für eine fertige oder halbfertige Linse, dadurch gekennzeichnet, daß das Gießen der polymerisierbaren Zusammensetzung nach einem der Ansprüche 13 oder 14 zwischen zwei Formen durchgeführt wird, welche die erforderlichen oberflächengeometrien aufweisen, und daß dann die Polymerisation, wie in Anspruch 15 oder 16 definiert, gefolgt von einem Härten durchgeführt wird.

**18.** Ophthalmische Linse, bestehend aus einer Polymerzusammensetzung nach einem der Ansprüche 1 bis 12.

**19.** ophthalmische Linse, bestehend aus einem Polymer, welches aus der Polymerisation der polymerisierbaren Zusammensetzung resultiert, wie sie in Anspruch 15 oder 16 definiert ist oder wie sie nach dem Verfahren der Ansprüche 15 oder 16 erhalten wurde.

**20.** Verwendung der Polymerzusammensetzung nach einem der Ansprüche 1 bis 12 zur Herstellung von ophthalmischen Linsen oder Linsen, welche für Sucher oder optische Apparate bestimmt sind.

**21.** Verwendung einer Linse, wie sie in Anspruch 18 oder 19 definiert ist, zur Herstellung von Brillengläsern oder verschiedenen Optiken.

**22.** Brillenglas, dadurch gekennzeichnet, daß es aus einer Linse, wie sie in Anspruch 18 oder 19 definiert ist, besteht.

**23.** Objektiv, dadurch gekennzeichnet, daß es wenigstens eine Linse, wie sie in Anspruch 18 oder 19 definiert ist, enthält.

**Claims**

**1.** Transparent polymer composition comprising:
a *component A* comprising:

- at least 10 % by weight of a monomer or of a mixture of monomers (I), containing at least one thio-acrylate or thiomethacrylate function;
- 0 to 90 % by weight of one or more monomers (II) which are copolymerizable by a radical route, preferably mono- or polyfunctional vinyl, acrylic or methacrylic; and

a *component B* comprising, relative to the weight of the component A:

- 0.1 to 15 % by weight of one or more monomers (III) containing an ethylenic unsaturation which does not contribute to an aromatic system and having a carbon bearing a free hydroxyl group in an a position relative to the ethylenic unsaturation.

**2.** Polymer composition according to Claim 1, characterized in that the monomer (III) contains, in a position $\alpha$ to the unsaturation, a carbon atom bearing a free hydroxyl group which is linked to at least one hydrogen atom.

**3.** Polymer composition according to Claim 1, characterized in that the monomer (III) corresponds to the formula:

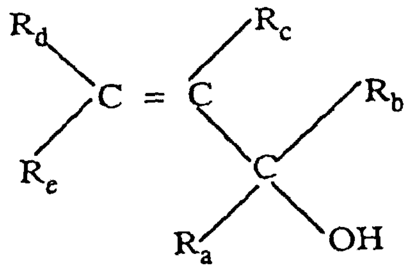

in which:

$R_a$ and $R_b$ represent hydrogen, or one of the groups $R_a$ and $R_b$ represents hydrogen while the other forms with the group $R_e$ a $C_5$-$C_{10}$ ring which may be substituted with one or more linear or branched $C_1$-$C_4$ alkyl groups or one or more $C_2$-$C_4$ alkylene groups; or one of the groups $R_a$ and $R_b$ may represent hydrogen while the other represents a $C_1$-$C_6$ aliphatic alkyl group, a $C_4$-$C_{16}$ cyclic hydrocarbon group or a $C_6$-$C_{16}$ aromatic hydrocarbon group;
$R_c$, $R_d$ and $R_e$ represent, independently of each other, hydrogen or a $C_1$-$C_6$ alkyl group which may be substituted with one or more OH groups, and in which the chain may be interrupted by one or more ether, ester or ketone groups; a $C_6$-$C_{16}$ aromatic hydrocarbon group or a $C_4$-$C_{16}$ cyclic hydrocarbon group;
$R_e$ may form with one of the groups $R_a$ or $R_b$ a $C_5$-$C_{10}$ ring which may be substituted with one or more linear or branched $C_1$-$C_4$ alkyl groups or one or more $C_2$-$C_4$ alkylene groups;
$R_c$ and $R_d$ may form a $C_5$-$C_{10}$ ring which may be substituted with one or more $C_1$-$C_4$ alkyl groups or $C_2$-$C_4$ alkylene groups; two or more of the carbon atoms of the $C_5$-$C_{10}$ ring formed with $R_a$ or $R_b$ and $R_e$ or with $R_c$ and $R_d$ may be linked by a hydrocarbon bridge.

**4.** Polymer composition according to Claim 3, characterized in that $R_a$ and $R_b$ represent hydrogen, $R_c$ represents a methyl group, $R_d$ represents hydrogen or a methyl group and $R_e$ represents hydrogen, a methyl group, an ethyl group or $-CH_2OH$.

**5.** Polymer composition according to Claim 3, characterized in that the monomer (III) is chosen from the group composed of allyl alcohol, methallyl alcohol, crotyl alcohol, 2-cyclohexen-1-ol, trans-2-hexen-1-ol, cis-2-butene-1,4-diol, 3-methyl-2-buten-1-ol, trans-2-methyl-3-phenyl-2-propen-1-ol, 3-buten-2-ol, carveol, myrtenol, verbenol and trans-cinnamyl alcohol.

**6.** Composition according to any one of the preceding claims, characterized in that the monomer (I) corresponds to the formula:

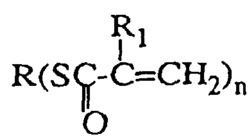

in which:

R represents a linear or branched, monovalent or polyvalent aliphatic hydrocarbon radical or an aryl group linked to the sulphur atom of the thio(meth)acrylate group or groups by an aromatic ring or by an intermediate linear alkyl chain, it being possible for the radical R to contain in its chain one or more groups chosen from -O-, -S- and

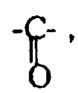

$R_1$ represents hydrogen or $-CH_3$; and

n is an integer from 1 to 6.

**7.** Composition according to Claim 6, characterized in that n is an integer from 1 to 3.

**8.** Polymer composition according to any one of Claims 1 to 7, characterized in that the monomers (I) are chosen from:

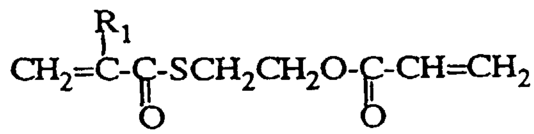

S-2-acryloyloxyethylthio(meth)acrylate,

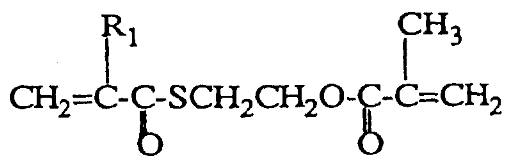

S-2-methacryloyloxyethylthio(meth)acrylate,

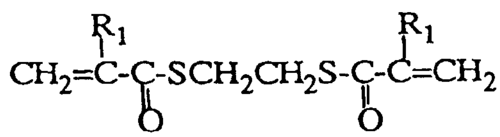

1,2-bis[(meth)acryloylthio]ethane,

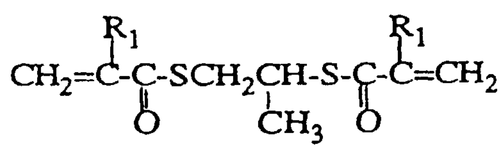

1,2-bis[(meth)acryloylthio]propane,

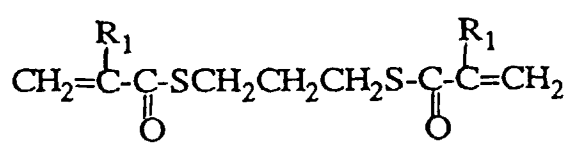

1,3-bis[(meth)acryloylthio]propane,

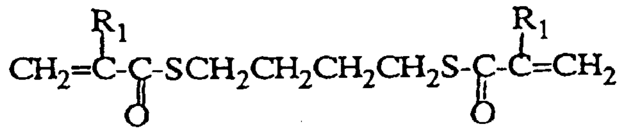

1,4-bis[(meth)acryloylthio]butane,

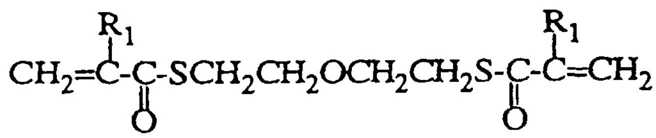

bis-2-[(meth)acryloylthioethyl] ether,

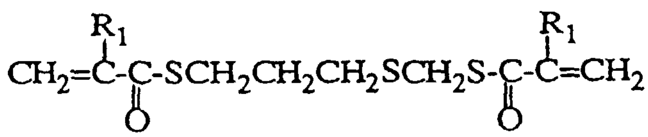

bis-2-[(meth)acryloylthioethyl] sulphide,

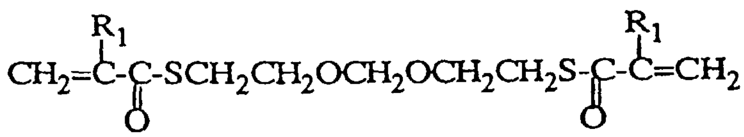

bis-2-[(meth)acryloylthioethoxy]methane,

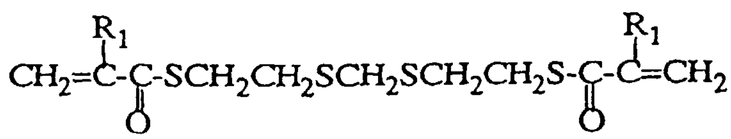

bis-2-[(meth)acryloylthioethylthio]methane,

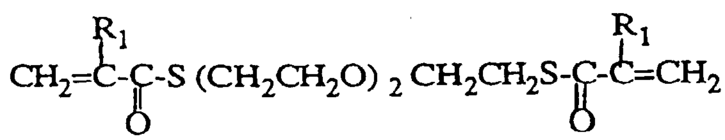

1,2-bis[2-(meth)acryloylthioethoxy]ethane,

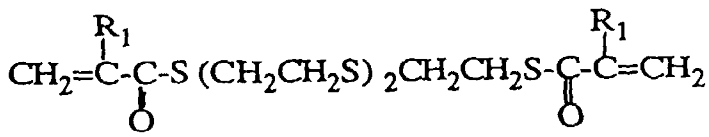

1,2-bis[2-(meth)acryloylthioethylthio]ethane,

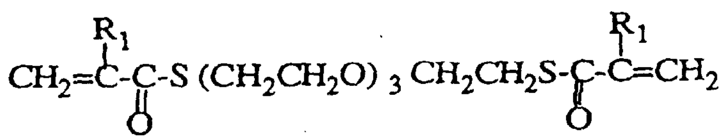

bis[2-(2-(meth)acryloylthioethoxy)ethyl] ether,

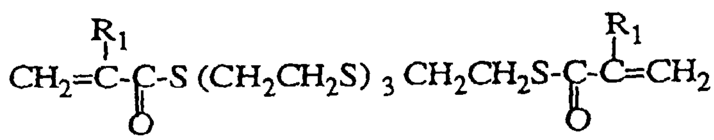

bis[2-(2-(meth)acryloylthioethylthio)ethyl] sulphide,

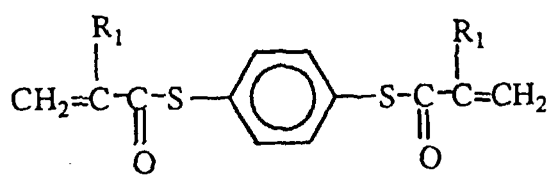

1,4-bis[(meth)acryloylthio]benzene,

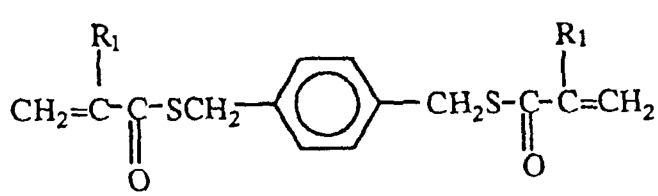

1,4-bis[(meth)acryloylthiomethyl]benzene,

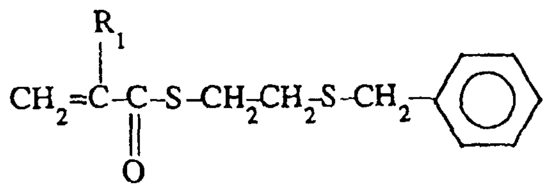

benzylthioethyl thio(meth)acrylate,

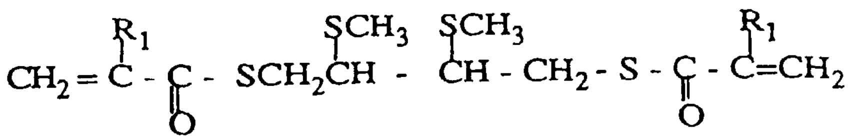

1,4-[bis(meth)acryloylthio]-2,3-dimethylthio-butane,

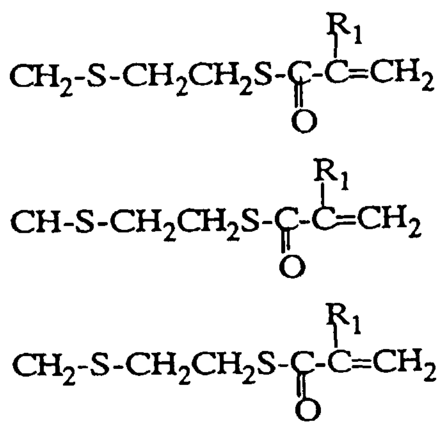

1,2,3-tris[(meth)acryloylthioethyl]thiolpropane,

and

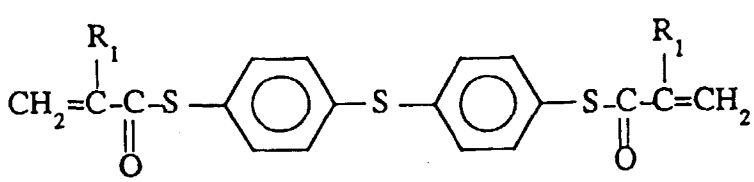

bis[(meth)acryloylthiophenyl] sulphide.

**9.** Polymer composition according to any one of the preceding claims, characterized in that the monomers (I) represent 20 to 60 % by weight of the component A.

**10.** Polymer composition according to any one of the preceding claims, characterized in that the comonomers (II) are chosen from mono- or polyvalent vinyl, acrylic or methacrylic comonomers.

**11.** Polymer composition according to Claim 10, characterized in that the component A comprises a mixture of comonomers (II), at least one of these comonomers being a comonomer of formula (IV):

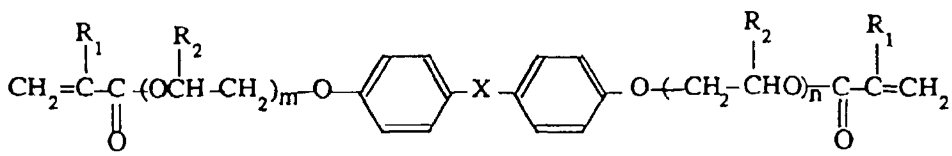

in which $R_1$ and $R_2$ denote, independently of each other, hydrogen or a $C_1$-$C_6$ lower alkyl radical, X denotes O, S, CO, $SO_2$, $-CH_2-$, -CH=CH- or

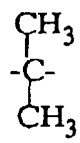

the sum m + n is between 0 and 10 inclusive.

**12.** Polymer composition according to Claim 10, characterized in that the comonomer or comonomers of formula (IV) represent less than 50 % by weight of the component A.

**13.** Polymerizable composition for lenses, characterized in that it comprises:

a *component A* comprising:

- at least 10 % by weight of a monomer or of a mixture of monomers (I), containing at least one thio-acrylate or thiomethacrylate function;
- 0 to 90 % by weight of one or more mono- or polyfunctional vinyl, acrylic or methacrylic comonomers (II); and

a *component B* comprising, relative to the weight of the component A:

- 0.1 to 15 % by weight of one or more monomers (III) containing an ethylenic unsaturation which does not contribute to an aromatic system and having a carbon bearing a free hydroxyl group in an a position relative to the ethylenic unsaturation.

**14.** Polymerizable composition for lens according to Claim 13, characterized in that it comprises monomers (I), (II) or (III) according to the definition of any one of Claims 2 to 12.

**15.** Process for the preparation of the polymer composition defined in any one of Claims 1 to 12, characterized in that the component A is mixed in the presence of a polymerization catalyst or initiator and in that 0.1 to 15 % by weight of component B, relative to the total weight of component A, is added and in that the polymerization is carried out.

**16.** Process for the preparation of the polymer composition according to Claim 15, characterized in that the polymerization is carried out by a photochemical route.

**17.** Process for the manufacture of a finished or semi-finished lens, characterized in that the polymerizable composition according to either of Claims 13 and 14 is poured between two moulds having the required surface geometries and in that the polymerization is then performed as defined in Claim 15 or 16, followed by recuring.

**18.** Ophthalmic lens consisting of a polymer composition according to any one of Claims 1 to 12.

**19.** Ophthalmic lens consisting of a polymer resulting from the polymerization of the polymerizable composition as

defined in Claim 15 or 16 or obtained according to the process of Claim 15 or 16.

**20.** Use of the polymer composition according to any one of Claims 1 to 12, for the manufacture of ophthalmic lenses or of lenses intended for viewers or optical apparatus.

**21.** Use of a lens as defined in Claim 18 or 19, for the manufacture of spectacle lenses or various optics.

**22.** Spectacle lens, characterized in that it consists of a lens as defined in Claim 18 or 19.

**23.** Objective, characterized in that it comprises at least one lens as defined in either of Claims 18 and 19.